# EUROPÄISCHE PATENTSCHRIFT

(11) **EP 1 952 933 B1**
(45) Veröffentlichungstag und Bekanntmachung des Hinweises auf die Patenterteilung: **11.08.2010**
(21) Anmeldenummer: 07023534.6
(22) Anmeldetag: 05.12.2007
(51) Int. Cl.: B23K 33/00, B62D 27/02, F16B 5/08

(54) **Karosserie-Anbauteil**
Car body component
Pièce rapportée de carrosserie

(30) Priorität: 03.02.2007 DE 102007005443
(43) Veröffentlichungstag der Anmeldung: 06.08.2008
(73) Patentinhaber: Bayerische Motoren Werke Aktiengesellschaft, 80809 München (DE)
(72) Erfinder: Hoesl, Anton, 93152 Nittendorf (DE); Berndl, Jürgen, 85405 Nandlstadt (DE)

(56) Entgegenhaltungen:
- EP-A- 0 722 807
- EP-A- 1 142 738
- DE-A1- 10 139 082
- DE-A1- 19 538 595
- US-A- 5 897 796

## Beschreibung

Die Erfindung bezieht sich auf ein Karosserie-Anbauteil und insbesondere eine Kraftfahrzeugtür, mit einem randseitig mit einem zurückgebogenen Bördelflansch versehenen Außen- und einem mit dem Bördelflansch des Außenblechs schmelznahtverbundenen Innenblech, nach dem Oberbegriff des Patentanspruchs 1.

Ein solches Karosserie-Anbauteil ist aus EP-A-0 722 807 bekannt.

Bei den z. B. aus der DE 35 15 598 C2 bekannten Anbauteilen dieser Art ist das Außenblech randseitig mit einem um 180° zurückgebogenen Bördelflansch versehen und das Innenblech mit diesem in flächiger Anlage an der dem Außenblech abgewandten Flanschseite durch eine Laserschweißnaht verbunden, um so mit einer geringen Randaufdickung einen optisch ansprechenden Randabschluss ohne Verletzungsrisiko an frei zugänglichen scharfen Blechkanten zu erhalten. Dabei hat sich jedoch gezeigt, dass sich mit einer üblichen Grundierung, etwa in Form einer kathodischen Tauchlackierung, kein ausreichender Korrosionsschutz erzielen lässt, sondern es vielmehr zu diesem Zweck im Randbereich des Anbauteils einer besonderen Versiegelung und/oder Verklebung bedarf, was unter dem Gesichtspunkt einer rationellen Bauteilfertigung ein erheblicher Nachteil ist.

Demgegenüber ist es Aufgabe der Erfindung, ein Anbauteil der eingangs genannten Art so auszubilden, dass unter Beibehalt eines optisch ansprechenden, schlanken und verletzungssicheren Randabschlusses auf fertigungstechnisch einfache Weise ein wirksamer Korrosionsschutz zu erzielen ist.

Diese Aufgabe wird erfindungsgemäß durch das im Patentanspruch 1 gekennzeichnete Karosserie-Anbauteil gelöst.

Erfindungsgemäß werden die einander zugekehrten Blechoberflächen zwischen Außenblech und Bördelflansch kontaktfrei in einem Abstand voneinander gehalten, der gerade so groß bemessen ist, dass eine Kapillarspaltbildung mit Sicherheit unterbunden wird, und dadurch erreicht, dass Feuchtigkeit, die zwischen diese Blechflächen eingedrungen ist, wieder ungehindert entweichen kann und dort nicht aufgrund des Kapillareffekts zurückgehalten wird und sich dann als Korrosionsherd auswirkt, und zugleich wird in den korrosionskritischen Randzonen des Anbauteils ein freier Zugang für ein fertigungstechnisch einfach und vollflächig applizierbares Korrosionsschutzmittel, vorzugsweis eine Grundierung in Form einer kathodischen Tauchlackierung, geschaffen, mit dem weiteren Effekt, dass beim Ausformen des Bördelflansches ein enges Umkanten im Verbindungsbereich zwischen Außenblech und Bördelflansch vermieden und dadurch der Gefahr einer Rissbildung in diesem Bereich wirksam begegnet wird. Das Ergebnis ist ein Anbauteil mit einem schmalen, aber von scharfen Kanten freigehaltenen und auf seriengerechte Weise hochgradig korrosionsgeschützten Randabschluss.

Im Hinblick auf eine möglichst schonende und verzugsfreie Schmelznahtverbindung mit geringem Wärmeeintrag ist das Innenblech am Bördelflansch vorzugsweise mittels eines Laser- oder Plasmastrahls befestigt, und zwar zweckmäßigerweise laserverlötet oder, wenn die Blechteile in Leichtbauweise aus Aluminium hergestellt sind, laserverschweißt.

In weiterer bevorzugter Ausgestaltung der Erfindung ist das Innenblech spitzwinklilg geneigt mit der dem Außenblech abgewandten Bördelflanschseite verbunden, wodurch sich auch an dieser Stelle ein freier Zugang zu den einander zugekehrten Blechoberflächen erhalten lässt.

Als besonders günstig hat sich eine lichte Spaltbreite zwischen Bördelflansch und Außenblech von einigen mm, vorzugsweise zwischen 2 und 5 mm, und ein Neigungswinkel des Innenblechs gegenüber dem Bördelflansch zwischen 15° und 30° erwiesen, um so unter Vermeidung von Kapillareffekten, aber auch ohne störende Aufdickung im Bereich des Randabschlusses eine vollflächige Tauchlackierung zu gewährleisten.

Schließlich empfiehlt es sich, den lichte Spalt zwischen Bördelflansch und Außenblech zum offenen Ende hin divergent, nämlich vorzugsweise unter einem Winkel zwischen 10° und 20°, zu erweitern, so dass sich der zum Ausformen des Bördelflansches benötigte Formeinsatz nach Beendigung des Biegeprozesses problemlos entformen lässt.

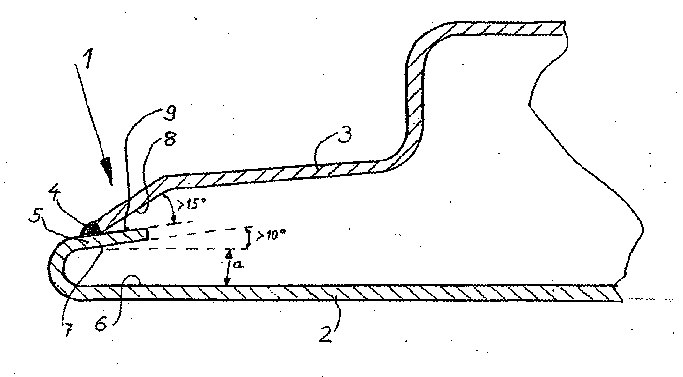

Die Erfindung wird nunmehr anhand eines Ausführungsbeispiels in Verbindung mit der Zeichnung näher erläutert. Diese zeigt in ihrer einzigen Figur in stark schematisierter, geschnittener Darstellung die Teilansicht einer erfindungsgemäß gestalteten Kraftfahrzeug-Rohbautür im Bereich des Randabschlusses.

Das in der Zeichnung im Bereich des Randabschlusses 1 dargestellte Karosserie-Anbauteil, etwa eine Kraftfahrzeug-Rohbautür, enthält ein Außen- und ein Innenblech 2, 3 aus Aluminium, die randseitig zumindest partiell umlaufend mittels einer Kehlnaht 4 laserverschweißt sind. Um ein Verletzungsrisiko an scharfen Blechkanten auszuschließen und zu verhindern, dass sich die Schweißnaht 4 auf der Sichtseite des Außenblechs 2 abzeichnet, ist das Innenblech 3 mit einem zurückgebogenen Bördelflansch 5 des Außenblechs 2 verschweißt, der jedoch nicht - wie üblich - auf die rückwärtige Außenblechfläche 6 zurückgebogen ist, sondern zu dieser kontaktfrei mit einer lichten Weite a zwischen den einander zugekehrten Außenblech- und Bördelflanschflächen 6 und 7 verläuft, wobei die lichte Weite a mindestens 2 mm beträgt, um einen Kapillareffekt in diesem Bereich mit Sicherheit zu vermeiden, aber auch nicht größer als hierfür erforderlich gewählt wird, um einen schlanken Randabschluss 1 ohne störende Aufdickung zu erhalten. Damit sich der zum Umbördeln des Bördelflansches 5 benötigte Formeinsatz nach Beendigung des Biegevorgangs problemlos entformen lässt, ist der Spalt zwischen den Blechflächen 6, 7 zum offenen Ende hin divergent um einen Winkel von mehr als 10° erweitert.

Zusätzlich sind auch die an die Schweißnaht 4 angrenzenden Flächenabschnitte 8, 9 zwischen Innenblech 3 und Bördelflansch 5 dadurch kontaktfrei gehalten, dass sie unter einem spitzen Winkel von mehr als 15° zueinander geneigt sind. Hierdurch werden auch an dieser Stelle - wiederum ohne übermäßige Aufdickung des Randabschlusses 1 - korrosionsgefährdende Kapillareffekte wirksam unterbunden.

Demgemäß wird durch die beschriebene, frei zugängliche Gestaltung der einander zugekehrten Blechflächen 6, 7 und 8, 9 zum einen sichergestellt, dass Feuchtigkeit, die zwischen diese korrosionskritischen Flächenbereiche 6, 7 oder 8, 9 eingedrungen ist, sich dort nicht aufgrund von Kapillareffekten festsetzen, sondern ungehindert wieder entweichen kann, und zum anderen gewährleistet, dass diese Flächenbereiche 6, 7 und 8, 9 bei der Grundierung der miteinander verschweißten Blechteile 2, 3 im Wege einer kathodischen Tauchlackierung vollflächig mitgrundiert und dadurch auf herstellungsmäßig problemlose, seriengerechte Weise mit einer Korrosionsschutzschicht überzogen werden. Das Ergebnis ist ein Anbauteil mit einem optisch und haptisch ansprechenden Randabschluss, der von verletzungsgefährdenden, scharfen Kanten und störenden Aufdickungen freigehalten und mit geringem Fertigungsaufwand hochgradig korrosionsgeschützt ist.

## Patentansprüche

1. Karosserie-Anbauteil, insbesondere Kraftfahrzeugtür, mit einem randseitig mit einem zurückgebogenen Bördelflansch versehenen Außenblech und einem mit dem Bördelflansch des Außenbleches zumindest partiell umlaufend schmelznahtverbundenen Innenblech, wobei das Außenblech (2) im Randbereich (1) U-förmig mit einer lichten Weite (a) zwischen Bördelflansch (5) und Außenblech (2) oberhalb der Kapillarspaltbreite Zurückgebogen ist,
**dadurch gekennzeichnet, dass** das Innenblech (3) spitzwinklig geneigt mit der dem Außenblech (2) abgewandten Bördelflanschseite (9) verbunden ist.

2. Karosserie-Anbauteil nach Anspruch 1, **dadurch gekennzeichnet, dass**
die Bleche (2, 3) im miteinander schmelznahtverbundenen Zustand als Korrosionsschutz mit einer Grundierung in Form einer kathodischen Tauchlackierung versehen sind.

3. Karosserie-Anbauteil nach Anspruch 1 oder 2, **dadurch gekennzeichnet, dass**
das Innenblech (3) mit dem Bördelflansch (5) mittels eines Laser- oder Plasmastrahls schmelznahtverbunden ist.

4. Karosserie-Anbauteil nach Anspruch 3, **dadurch gekennzeichnet, dass**
das Innenblech (3) mit dem Bördelflansch (5) laserverlötet ist.

5. Karosserie-Anbauteil nach Anspruch 3, **dadurch gekennzeichnet, dass**
das Außen- und das Innenblech (2, 3) aus Aluminium bestehen und miteinander laserverschweißt sind.

6. Karosserie-Anbauteil nach einem der vorhergehenden Ansprüche, **dadurch gekennzeichnet, dass**
die lichte Weite (a) zwischen Außenblech (2) und Bördelflansch (5) im Millimeterbereich, mindestens aber bei 2 mm liegt.

7. Karosserie-Anbauteil nach einem der vorhergehenden Ansprüche, **dadurch gekennzeichnet, dass**
der lichte Spalt zwischen Außenblech (2) und Bördelflansch (5) zum offenen Ende hin divergent erweitert ist.

8. Karosserie-Anbauteil nach Anspruch 7, **dadurch gekennzeichnet, dass**
der lichte Spalt einen Öffnungswinkel zwischen 10° und 20° aufweist.

9. Karosserie-Anbauteil nach Anspruch 1 **dadurch gekennzeichnet, dass**
das Innenblech (3) im bördelflanschseitigen Verbindungsbereich unter einem Winkel zwischen 15° und 30° gegenüber dem Bördelflansch (5) geneigt ist.

## Claims

1. A car body attachment, especially a motor vehicle door, with an outer metal sheet provided with a bent-back flange at the edge and an inner metal sheet at least partially connected peripherally by a fuse weld to the flange of the outer metal sheet, the outer metal sheet (2) being bent back in the edge region (1) in a U-shape with a clear width (a) between the flange (5) and outer metal sheet (2) above the capillary gap width, **characterised in that** the inner metal sheet (3), inclined at an acute angle, is connected to the flange side (9) remote from the outer metal sheet (2).

2. A car body attachment according to claim 1, **characterised in that** the metal sheets (2, 3) in the state connected to one another by a fuse weld, are provided with a primer in the form of a cathodic dip-coating as corrosion protection.

3. A car body attachment according to claim 1 or 2, **characterised in that** the inner metal sheet (3) is connected by a fuse weld to the flange (5) by means of a laser or plasma beam.

4. A car body attachment according to claim 3, **characterised in that** the inner metal sheet (3) is laser-soldered to the flange (5).

5. A car body attachment according to claim 3, **characterised in that** the outer and the inner metal sheet (2, 3) consist of aluminium and are laser-welded to one another.

6. A car body attachment according to any one of the preceding claims, **characterised in that** the clear width (a) between the outer metal sheet (2) and flange (5) is in the millimetre range, but at least 2 mm.

7. A car body attachment according to any one of the preceding claims, **characterised in that** the clear gap between the outer metal sheet (2) and flange (5) is widened in a diverging manner toward the open end.

8. A car body attachment according to claim 7, **characterised in that** the clear gap has an opening angle of between 10° and 20°.

9. A car body attachment according to claim 1, **characterised in that** the inner metal sheet (3) in the connecting region on the flange side is inclined at an angle of between 15° and 30° in relation to the flange (5).

## Revendications

1. Pièce rapportée de carrosserie, en particulier pour une porte de véhicule automobile comprenant :
sur son bord une tôle extérieure munie d'une bride à rebord repliée et une tôle intérieure reliée par un cordon de soudure au moins sur une partie de la périphérie avec la bride à rebord de la tôle extérieure, la tôle extérieure (2) étant repliée dans la zone de bordure (1) en forme de U avec un espace libre (a) entre la bride à rebord (5) et la tôle extérieure (2) supérieur à la largeur de fente capillaire,
**caractérisée en ce que**
la tôle intérieure (3) est reliée, inclinée selon un angle aigu, au côté de la bride à rebord (9) non tourné vers la tôle extérieure (2).

2. Pièce rapportée de carrosserie selon la revendication 1,
**caractérisée en ce que**
les tôles (2, 3) lorsqu'elles sont réunies par un cordon de soudure, sont protégées contre la corrosion par une couche d'apprêt sous forme d'une peinture déposée par électrolyse en immersion.

3. Pièce rapportée de carrosserie selon la revendication 1 ou 2,
**caractérisée en ce que**
la tôle intérieure (3) est reliée à la bride à rebord (5) au moyen d'un cordon de soudure réalisée par laser ou plasma.

4. Pièce rapportée de carrosserie selon la revendication 3,
**caractérisée en ce que**
la tôle intérieure (3) est soudée au laser à la bride à rebord (5).

5. Pièce rapportée de carrosserie selon la revendication 3,
**caractérisée en ce que**
la tôle extérieure et la tôle intérieure (2, 3) sont en aluminium et soudées entre elles par une soudure au laser.

6. Pièce rapportée de carrosserie selon l'une des revendications précédentes,
**caractérisée en ce que**
l'espace libre (a) entre la tôle extérieure (2) et la bride à rebord (5) est de l'ordre du millimètre mais d'au moins 2 millimètres.

7. Pièce rapportée de carrosserie selon l'une des revendications précédentes,
**caractérisée en ce que**
l'espace libre (a) entre la tôle extérieure (2) et la bride à rebord (5) s'écarte en divergeant vers l'extrémité ouverte.

8. Pièce rapportée de carrosserie selon la revendication 7,
**caractérisée en ce que**
l'espace libre (a) présente un angle d'ouverture entre 10 et 20°.

9. Pièce rapportée de carrosserie selon la revendication 1,
**caractérisée en ce que**
dans la zone de liaison du côté de la bride à rebord (5), la tôle intérieure (3) est inclinée d'un angle entre 15° et 30° par rapport à la bride à rebord (5).
